Europäisches Patentamt

European Patent Office

Office européen des brevets

(19)

(11) **EP 0 739 309 B1**

(12) **FASCICULE DE BREVET EUROPEEN**

(45) Date de publication et mention
de la délivrance du brevet:
**31.03.1999 Bulletin 1999/13**

(21) Numéro de dépôt: **95903376.2**

(22) Date de dépôt: **07.12.1994**

(51) Int. Cl.$^6$: **C01F 7/06**

(86) Numéro de dépôt international:
**PCT/FR94/01429**

(87) Numéro de publication internationale:
**WO 95/19318 (20.07.1995 Gazette 1995/31)**

(54) **PROCEDE DE TRAITEMENT DE BAUXITE A TRIHYDRATE D'ALUMINE**

VERFAHREN ZUR BEHANDLUNG VON ALUMINIUMTRIHYDRAT ENTHALTENDEM BAUXIT

PROCESS FOR THE TREATMENT OF ALUMINA TRIHYDRATE BAUXITE

(84) Etats contractants désignés:
**FR**

(30) Priorité: **18.01.1994 FR 9400683**

(43) Date de publication de la demande:
**30.10.1996 Bulletin 1996/44**

(73) Titulaire: **ALUMINIUM PECHINEY**
**92400 Courbevoie (FR)**

(72) Inventeurs:
• **BITSCH, Robert**
**F-13100 Aix-en-Provence (FR)**
• **LAMERANT, Jean-Michel**
**F-13320 Bouc-Bel-Air (FR)**

(74) Mandataire: **Mougeot, Jean-Claude**
**PECHINEY**
**28, rue de Bonnel**
**69433 Lyon Cedex 03 (FR)**

(56) Documents cités:
EP-A- 0 389 061          WO-A-93/22238
US-A- 2 701 752          US-A- 4 324 769

## Description

### DOMAINE TECHNIQUE

L'invention concerne un procédé de traitement de bauxite à trihydrate d'alumine, selon le procédé Bayer, combinant une attaque alcaline à pression atmosphérique d'une fraction importante de ladite bauxite avec une attaque alcaline à plus haute température de la fraction restante de cette même bauxite.

### ETAT DE LA TECHNIQUE

Le procédé Bayer largement décrit dans la littérature spécialisée constitue la technique essentielle de production d'alumine destinée à être transformée en aluminium par électrolyse ignée ou à être utilisée à l'état d'hydrate, d'alumine de transition, d'alumine calcinée, d'alumine frittée ou fondue, dans les nombreuses applications relevant du domaine des alumines techniques.

Selon ce procédé, le minerai de bauxite est attaqué à chaud au moyen d'une solution aqueuse d'hydroxyde de sodium ou "soude caustique" à concentration appropriée, assurant ainsi la solubilisation de l'alumine et l'obtention d'une solution sursaturée d'aluminate de sodium. Après séparation de la phase solide constituant le résidu inattaqué (boues rouges) du minerai, la solution sursaturée d'aluminate de sodium est ensemencée avec des particules de trihydrate d'alumine dans le but de provoquer la précipitation de l'alumine sous forme de trihydrate d'alumine. La liqueur d'aluminate de sodium appauvrie en alumine, dite liqueur décomposée, est recyclée à l'étape de l'attaque après avoir été éventuellement concentrée et rechargée en hydroxyde de sodium pour reconstituer une liqueur, dite liqueur d'attaque, dont la concentration est appropriée à la nature de la bauxite à attaquer.

Il est bien connu en effet de l'homme du métier que les conditions de traitement des bauxites par attaque alcaline, selon le procédé Bayer, doivent être adaptées en fonction du degré d'hydratation et de la structure cristallographique de l'alumine contenue mais également de la nature et de la teneur des impuretés présentes (silice, oxydes de fer, matières humiques...). C'est ainsi que les bauxites contenant de l'alumine à l'état de monohydrate (boehmite, diaspore) sont traitées à des températures supérieures à 200°C et généralement comprises entre 220°C et 300°C, alors que les bauxites contenant de l'alumine à l'état de trihydrate (hydrargillite appelée également gibbsite) sont attaquées à des températures inférieures à 200°C et généralement comprises entre 100°C et 170°C.

Dans la plupart des cas les rendements d'extraction de l'alumine solubilisable sont supérieurs à 95 % et la pureté de la liqueur d'aluminate de sodium résultante (conditionnant la pureté du trihydrate d'alumine précipité ultérieurement) est satisfaisante si l'on prend la précaution au moins de limiter le taux de ces impuretés (silice soluble, oxydes de fer, matières humiques dégradées...) par des opérations sélectives d'épuration. Cette épuration, notamment dans le cas de la silice, peut s'avérer toutefois plus ou moins difficile à réaliser selon les formes minéralogiques de l'impureté présente.

Le choix des conditions de traitement d'une bauxite à trihydrate d'alumine n'est toutefois pas uniquement fonction des critères de rendement et de pureté recherchés. En effet d'autres facteurs, comme l'importance de l'investissement nécessaire à la mise en oeuvre du procédé ainsi que son coût d'exploitation, faisant intervenir notamment la notion de productivité sont à prendre en considération. Par productivité, il faut comprendre productivité de la liqueur d'aluminate de sodium sursaturée issue de l'attaque alcaline, exprimée par la quantité d'alumine en gramme par litre ou en kg par m3 de liqueur qui précipite lors de la décomposition en présence d'amorce. Cette productivité est déterminée par le produit de la concentration en $Na_2O$ caustique de ladite liqueur par la différence des rapports de concentration $Rp = Al_2O_3 g/l/Na_2O$ g/l entre l'entrée et la sortie de la décomposition. Elle peut atteindre, voire dépasser, 80 g. $Al_2O_3$/litre (80 kg $Al_2O_3$/m3).

Ainsi un tel résultat peut être obtenu quand on attaque entre 140 et 160°C de la bauxite broyée, ayant généralement subi un traitement de dessilicatation, par une liqueur décomposée d'aluminate de sodium éventuellement concentrée par évaporation dont la concentration en Na2O caustique est comprise entre 130 et 200 g/litre permettant d'atteindre en fin d'attaque un rapport pondéral Rp de l'ordre de 1,20, qui après décomposition, est abaissé aux environs de 0,60.

Si on recherche en fin d'attaque des Rp encore plus élevés (1,30 à 1,35) on est confronté, lors du refroidissement et de la décantation de la suspension issue de l'attaque, au problème de la rétrogradation sous forme d'hydragillite d'une partie de l'alumine solubilisée ; c'est-à-dire à une précipitation par nucléation spontanée de l'alumine solubilisée en trihydrate d'alumine. Cette rétrogradation peut être activée aussi par la présence des fines particules des boues en suspension faisant office d'amorce de décomposition lors de la décantation des boues rouges de sorte que : la perte de rendement par rétrogradation peut dépasser 5% faisant perdre tout intérêt à la recherche d'un Rp très élevé.

Par ailleurs l'obtention de températures d'attaque comprises entre 130° et 200°C nécessite la mise en oeuvre d'autoclaves ou de réacteurs sous pression (type réacteurs tubulaires) engendrant à la fois des investissements importants et des coûts d'exploitation très sensiblement majorés par l'énergie consommée et les frais de maintenance.

C'est la raison pour laquelle se sont développés les procédés d'attaque à l'atmosphère dits "procédés atmosphériques" qui à l'exception des conditions d'attaque effectuée au voisinage de 100°C, à la pression atmosphérique, reconduisent les autres conditions d'attaque de la bauxite à trihydrate. Compte tenu de la simplicité des moyens à mettre en oeuvre, les coûts d'entretien et de maintenance ainsi que l'importance des investissements sont significativement diminués. C'est sur ce principe que fonctionnent plusieurs usines de traitement de bauxite installées à proximité du lieu d'extraction du minerai en Afrique ou en Inde. Outre l'augmentation des temps de séjour consécutive au ralentissement d'une part de la cinétique de dessilicatation, c'est-à-dire d'élimination d'une quantité significative de silice soluble ou réactive par précipitation sous une forme insoluble, d'autre part de la cinétique de dissolution de l'alumine extractible ou solubilisable, l'inconvénient majeur des procédés atmosphériques est leur faible productivité qui n'excède généralement par 75 kg/m3. En effet, au voisinage de 100°C il n'est pas possible de dépasser des valeurs de Rp supérieures à 1,10 sans risquer de provoquer, par trop forte sursaturation, une rétrogradation importante de l'alumine en hydrargillite lors du refroidissement et de la décantation de la suspension réalisés à des températures souvent inférieures à 100°C.

## PROBLEME POSE

Pour l'homme du métier exploitant un procédé atmosphérique de traitement de la bauxite à trihydrate, l'obtention d'une productivité d'au moins 80 kg/m3 équivalente à celle des procédés d'attaque à plus haute température et cela sans augmentation des autres coûts d'exploitation ni investissement important, reste un problème mal résolu.

## OBJET DE L'INVENTION

L'invention concerne un procédé de traitement de bauxite à trihydrate d'alumine selon le procédé Bayer combinant une attaque alcaline à pression atmosphérique d'au moins 40% en poids de ladite bauxite avec une attaque alcaline à plus haute température de la fraction restante de cette même bauxite. Ce procédé, que nous appellerons par simplification dans la suite de la description "procédé d'attaque mixte" ou "procédé mixte", apporte une solution satisfaisante au problème précédemment évoqué que doit résoudre l'homme du métier.
Plus précisément l'invention concerne un procédé de traitement de bauxite à trihydrate par attaque sodique, selon le procédé Bayer, comportant les étapes de broyage et de dessilicatation en présence d'une aliquote de liqueur décomposée d'aluminate de sodium, puis de mise en contact de ladite bauxite broyée et dessilicatée avec le reste de la liqueur décomposée, éventuellement concentrée, pour former une suspension qui, après dilution, est décantée et filtrée pour séparer la fraction solide des boues rouges de la liqueur d'aluminate de sodium sursaturée, ladite liqueur étant alors décomposée en présence d'amorce puis recyclée comme liqueur d'attaque après séparation du trihydrate d'alumine caractérisé en ce que :

- une 1ère fraction d'au moins 40% en poids de bauxite à trihydrate broyée et dessilicatée est mis en contact à la pression atmosphérique à une température comprise entre 100°C et 107°C et pendant au moins une heure avec une aliquote de liqueur décomposée et éventuellement concentrée par évaporation ou liqueur d'attaque, dont le rapport pondéral Rp est compris entre 0,5 et 0,7 et la concentration en soude caustique est comprise entre 180 et 220 g. $Na_2O$/litre, pour former une 1ère suspension dont le rapport pondéral Rp est compris entre 1 et 1,20 et la concentration en soude caustique est comprise entre 160 et 200 g $Na_2O$/litre, ladite première suspension après légère dilution étant éventuellement soumise à une nouvelle dessilicatation ou post-dessilicatation par maintien en température à environ 100°C pendant au moins 2 heures,

- la fraction restante de bauxite à trihydrate broyée et dessilicatée, n'excédant pas 60% en poids, est mise en contact pendant au moins 5 minutes entre 130°C et 180°C avec le reste de la liqueur décomposée et éventuellement concentrée par évaporation, ou liqueur d'attaque, pour former une 2ème suspension dont le rapport pondéral Rp est compris entre 1,30 et 1,55 et la concentration en soude caustique est comprise entre 160 et 220 g $Na_2O$/litre,

- les deux suspensions ainsi obtenues, dont les températures après attaque sont respectivement comprises entre 90°C et 100°C pour la 1ère suspension et 110°C et 130°C pour la 2ème suspension après détente, sont intimement mélangées et diluées avec l'eau de lavage à contre-courant des boues rouges pour former une 3ème suspension dont le rapport des concentrations Rp est compris entre 1,13 et 1,28 et la concentration en soude caustique est comprise entre 140 et 175 g $Na_2O$/litre, à une température comprise entre 100 et 107°C,

- ladite 3ème suspension, dont le Rp après séparation des boues par décantation, doit rester compris entre 1,13 et 1,23 est éventuellement rediluée pour régler sa concentration en soude caustique avant filtration entre 140 et 160 g $Na_2O$/litre, puis décomposée en présence d'amorce selon l'art antérieur pour précipiter du trihydrate d'alumine qui est séparé par filtration de la liqueur décomposée dont le rapport de concentration Rp est compris entre 0,5 et 0,7 et la concentration en soude caustique est comprise entre 140 et 160 g $Na_2O$/litre,

- une fraction de liqueur décomposée est recyclée directement à l'étape de broyage humide de la bauxite en tête de procédé à raison d'environ 0,6 m3 par tonne de bauxite à broyer, alors que le reste de liqueur décomposée est concentrée par évaporation puis recyclée comme liqueur d'attaque.

Lors de ses essais, la demanderesse a pu constater en effet que les performances du procédé d'attaque atmosphérique des bauxites à trihydrate pouvaient être significativement améliorées, en terme de productivité notamment, sans requérir de coûteux investissements complémentaires ni de modifications fondamentales du procédé de base. Gela, par simple enrichissement de la liqueur sursaturée issue de l'attaque atmosphérique de bauxite (dont le Rp ne peut guère excéder 1,10), à l'aide d'une liqueur fortement sursaturée donc peu stable (Rp généralement compris entre 1,35 et 1,50) issue de l'attaque en parallèle à plus haute température d'une fraction de la même bauxite à trihydrate. Le mélange intime de ces 2 liqueurs immédiatement après attaque permet, après une légère dilution d'obtenir au moindre coût une liqueur sursaturée d'aluminate de sodium conservant une stabilité suffisante à la température où s'effectue la décantation et assurant après décomposition une forte productivité grâce au meilleur compromis entre les 3 caractéristiques essentielles qui règlent la sursaturation avant décantation : température, Rp initial et concentration en soude caustique à savoir :

- Température : 100°C à 107°C
- Rp initial : 1,13 à 1,25
- Concentration en soude caustique : 140 à 160 g $Na_2O$/litre

La demanderesse a pu également constater lors du traitement de bauxite à trihydrate d'alumine selon le procédé d'attaque mixte de l'invention que l'opération habituelle de dessilicatation de la bauxite généralement effectuée avant attaque et d'une durée maximale d'une dizaine d'heures devait en fait être réalisée sur plus de 30 heures, voire 40 heures, avec les bauxites à trihydrate dont la teneur pondérale en silice réactive est faible et n'excède en général pas 2%. Cela en vue d'atteindre un taux d'épuration en silice soluble acceptable, à savoir $SiO_2$ sol/$Na_2O$ caust $\leq$ 0,70%, dans la liqueur d'aluminate de sodium sursaturée à partir de laquelle est précipité le trihydrate d'alumine par décomposition en présence d'amorce. Ce problème de l'augmentation anormale des durées de dessilicatation, et donc des temps de séjour, très souvent rencontré lors du traitement des bauxites à trihydrate à faible teneur en silice réactive est lié à la cinétique très lente de précipitation sous forme de silico-aluminate de sodium insoluble, de la silice réactive solubilisée dans la liqueur alcaline; cinétique d'autant plus lente que la bauxite contient moins de silice réactive pour déplacer l'équilibre de la réaction vers la formation du composé insoluble.

Pour ne pas annuler par des traitements de dessilicatation de trop longue durée les avantages procurés par l'attaque mixte selon l'invention des bauxites à trihydrate, la demanderesse a mis au point dans le cas particulier des bauxites à faible teneur en silice réactive un traitement spécifique dit de double dessilicatation consistant à effectuer une prédessilicatation de la bauxite dans les conditions habituelles, c'est-à-dire limitée dans le temps à une dizaine d'heures, puis une dessilicatation après attaque, ou post-dessilicatation, de quelques heures de la seule fraction de minerai attaquée à la pression atmosphérique pour obtenir, après cette double dessilicatation de cette seule fraction, une teneur pondérale en silice double rapportée à $Na_2O$ caustique $\leq$ 0,50%; ce qui permet d'assurer dans la liqueur sursaturée à décomposer, mélange des liqueurs issues des attaques à pression atmosphérique et à moyenne pression, une teneur pondérale $SiO_2$ sol/$Na_2O$ caust. n'excédant pas la limite requise de 0,70% et cela sans altérer le rendement d'extraction de l'alumine solubilisable ni la productivité de liqueur.

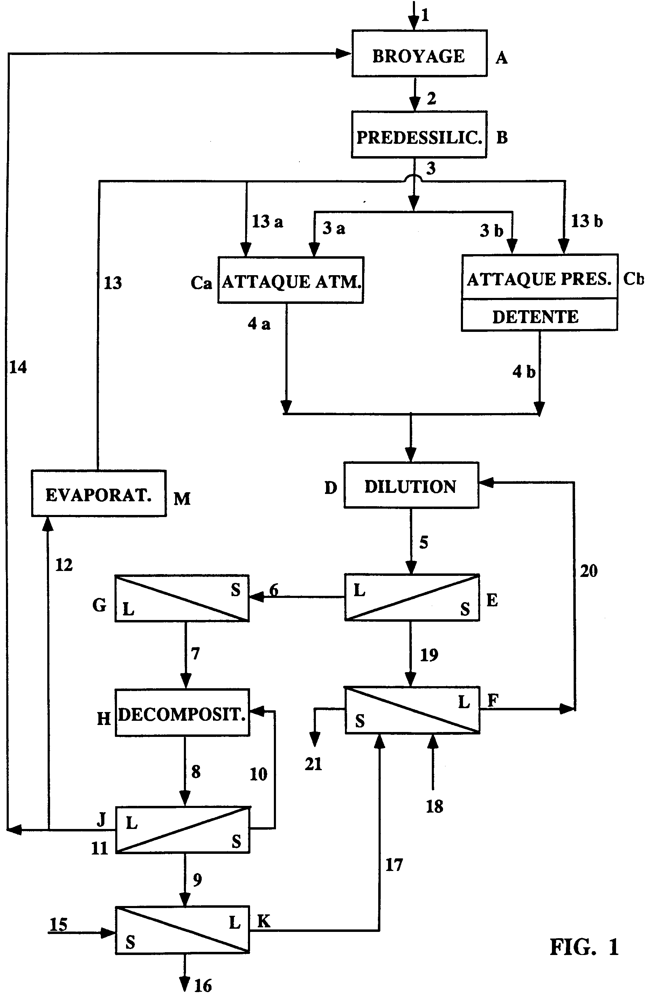

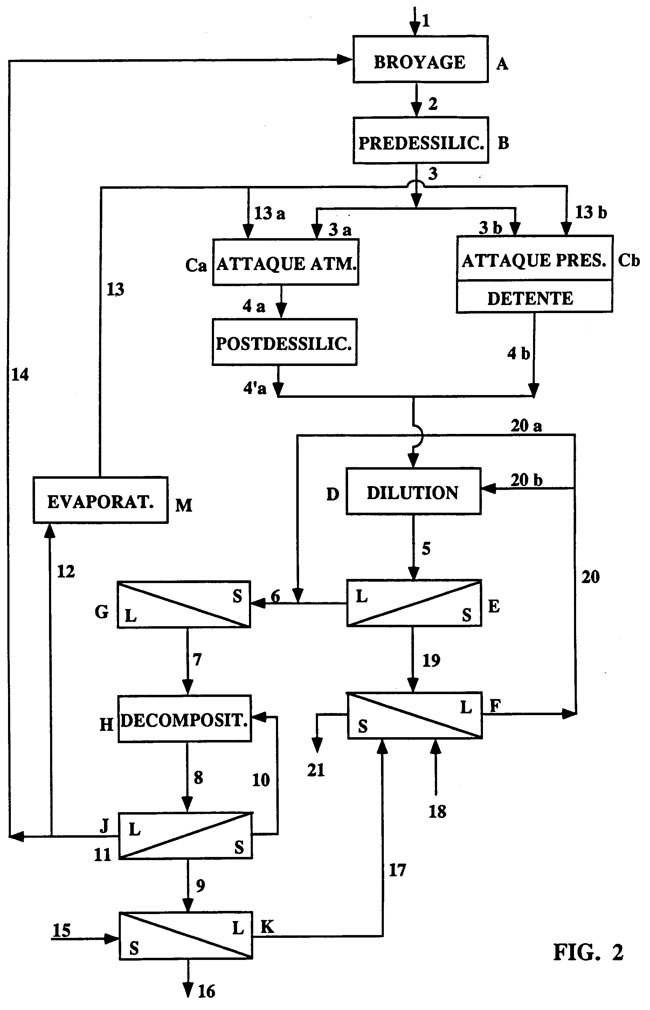

L'invention sera mieux comprise par la description détaillée ci-après du mode de mise en oeuvre de l'invention en se référant à la figure 1, représentation schématique du procédé d'attaque mixte dans sa version usuelle et à la figure 2 représentation schématique du procédé d'attaque mixte selon la variante "double dessilicatation", c'est-à-dire associant à la prédessilicatation de la bauxite une dessilicatation après attaque ou post-dessilicatation de la fraction de bauxite attaquée à la pression atmosphérique.

Selon la figure 1, la bauxite à trihydrate d'alumine 1 est mise en contact avec une aliquote 14 de liqueur décomposée 11 d'aluminate de sodium dont le Rp est de préférence compris entre 0,57 et 0,65 et la concentration en soude caustique comprise de préférence entre 150 et 160 g $Na_2O$/litre à raison de 1600 à 1800 kg de minerai sec à traiter par m3 de liqueur pour former après broyage humide A une suspension épaisse 2 qui subit une dessilicatation B par chauffage entre 90°C et 105°C pendant un temps suffisant, généralement compris entre 5 et 10 heures, pour dissoudre la silice solubilisable (en particulier le kaolin $Al_2O_3$, $2SiO_2$, $2H_2O$) contenue dans la bauxite et la reprécipiter sous forme de silicoaluminate de sodium très peu soluble mais dont la cinétique de précipitation est lente.

La suspension épaisse 3 après broyage et dessilicatation est scindée en 2 fractions :

Une première fraction 3a représentant au moins 40% et de préférence 50% à 65% en poids de la bauxite à traiter 1, est mise en contact Ca, pendant 2 à 5 heures et à une température comprise entre 103°C et 107°C, avec une aliquote 13a de liqueur d'attaque 13 dont le Rp est compris entre 0,57 et 0,65 et la concentration en soude caustique comprise entre 195 et 215 g $Na_2O$/litre. Au terme de l'attaque on obtient une 1ère suspension 4a dont le Rp est compris entre 1,05 et 1,15 et la teneur en soude caustique est comprise entre 175

et 185 g $Na_2O$/litre.

- La fraction restante correspondant à 60% au plus et de préférence à 35% à 50% en poids de la bauxite à traiter 1 est mise en contact Cb, pendant 10 à 30 minutes en autoclave chauffé entre 140°C et 155°C, avec l'autre aliquote 13b de la liqueur d'attaque 13 pour former une 2ème suspension 4b dont le Rp est compris entre 1,30 et 1,50 et la concentration en $Na_2O$ caustique est comprise entre 175 à 195 g $Na_2O$/litre.

Le mélange et la dilution des suspensions 4a et 4b est réalisée à l'étape suivante D. Plus précisément la suspension 4a issue de l'attaque atmosphérique, déjà légèrement refroidie entre 95°C et 100°C, est intimement mélangée avec la suspension 4b, issue de l'attaque en autoclave, dont la température après détentes successives est encore d'environ 120°C ce qui permet de réchauffer à la fois la suspension trop froide 4a de l'attaque atmosphérique et la liqueur de dilution 20 provenant du lavage à contre-courant F des boues rouges. Cette liqueur de dilution 20 contenant moins de 100 g de $Na_2O$/litre est destinée à abaisser la concentration en soude caustique du mélange de suspensions 4a et 4b dans une plage de concentrations plus adaptée à la bonne réalisation des opérations ultérieures de décantation et surtout de décomposition.

Ainsi la suspension 5 résultant de l'étape mélange et dilution D, dont la température se situe entre 100°C et 105°C avec un rapport Rp compris entre 1,135 et 1,25 et une concentration en soude caustique comprise entre 140 et 160 g $Na_2O$/litre est mise en décantation E pour séparer de façon connue les boues rouges 19 mises en décharge 21 après lavage à contre-courant successivement par l'eau de lavage 17 du trihydrate d'alumine de production 16, puis à l'eau pure 18.

La liqueur 6 issue de décantation dont le Rp doit rester compris entre 1,13 et 1,23 subit une filtration de sécurité G en vue d'éliminer les fines particules de boue en suspension encore en suspension. Le filtrat clarifié 7 de liqueur sursaturée d'aluminate de sodium est décomposée H en présence d'amorce de trihydrate 10 recyclé selon l'art antérieur. Le trihydrate d'alumine en suspension 8 dans la liqueur décomposée est séparé par filtration J pour être en majeure partie (90% environ en poids) recyclé comme amorce 10 et en partie mineure 9 (10% environ) extrait pour la production 16 après lavage K à l'eau 15. Le reliquat 12 du filtrat 11 de liqueur décomposée d'aluminate de sodium de Rp compris entre 0,57 et 0,65 et de concentration en soude caustique comprise entre 150 et 160 g $Na_2O$/litre, après prélèvement d'une aliquote 14 destinée au broyage humide et à la dessilicatation de la bauxite à raison de 1600 à 1800 kg de minerai sec par m3 de liqueur, est concentrée par évaporation M pour fournir la liqueur d'attaque 13 de la bauxite broyée et dessilicatée, dont les caractéristiques ont été déjà précisées.

Il est évidemment avantageux dans le procédé mixte de travailler à concentration en soude élevée (selon le procédé Bayer Européen) et d'effectuer la décantation dans des décanteurs à haute performance dans le but de réduire la consommation spécifique d'énergie mais surtout d'améliorer encore la productivité par limitation des temps de séjour, des temps de refroidissement et par voie de conséquence de la rétrogradation.

Par ailleurs le procédé mixte selon l'invention, comparé aux procédés de l'art antérieur, permet à poids égal de minerai, de réduire significativement en volume les flux de produit traités en autoclave entre 140°C et 160°C. Ainsi dans un exemple selon la version préférentielle où 35% à 50% en poids de la bauxite est attaquée en autoclave, le volume v de liqueur d'attaque mis en oeuvre est nettement inférieur à celui V du procédé atmosphérique. Il est en effet décroissant en fonction des rapports pondéraux Rp visés en fin d'attaque dans les 2 procédés (environ 1,10 pour le procédé atmosphérique et 1,425 pour le procédé mixte), de sorte que

$$v = V \; \frac{(1,10 - 0,6)}{(1,425 - 0,6)} = 0,6 \; V$$

Rapporté aux volumes v' et V' des suspensions correspondantes, v' est de l'ordre de 0,6 V', traduisant donc une diminution de volume de l'ordre de 30% des flux de matière et limitant ainsi à un volume de flux de 21 à 30% du flux total de matière le traitement en autoclave des 35 à 50% en poids de la bauxite à trihydrate.

En terme d'investissement ce constat est très important pour l'homme du métier, car le coût de mise en oeuvre de quelques réacteurs sous pression destinés à traiter seulement 21 à 30% du flux total de matière est largement compensé par l'économie d'investissement réalisé par ailleurs sur l'ensemble du procédé, du fait de la réduction des volumes spécifiques des produits traités à chaque étape.

Dans la variante, selon la figure 2, adaptée au traitement des bauxites à basse teneur en silice réactive, on réalise de façon strictement similaire à celle de la figure 1 les opérations de broyage A, prédessilicatation B, puis les attaques des 2 fractions 3a et 3b respectivement à la pression atmosphérique Ca pour la fraction 3a et en autoclave Cb entre 140°C et 155°C pour la fraction 3b. On obtient ainsi au terme de ces 2 attaques conduites en parallèle :

- une première suspension 4a dont le Rp est compris entre 1,05 et 1,15 et la concentration en soude caustique est comprise entre 185 et 195 g $Na_2O$/litre.

  Par dilution, par exemple avec une partie de 20a des eaux de dilution 20 provenant du lavage à contre-courant des boues insolubles ou du lavage du trihydrate d'alumine de production, on ajuste la concentration en soude caustique de cette suspension 4a entre 160 et 180 g Na$_2$O/litre et de préférence entre 165 et 175 g Na$_2$O/litre. On réalise ensuite par maintien à une température comprise entre 97 et 103°C pendant plus de 2 heures et de préférence 3 à 5 heures la post-dessilicatation de cette suspension 4a dont la teneur en silice soluble SiO$_2$ rapportée à la soude caustique Na$_2$O est abaissée entre 0,40 et 0,50% pour donner la suspension 4'a.

- Une deuxième suspension 4b dont le Rp est compris entre 1,30 et 1,50, la concentration en Na$_2$O caustique est comprise entre 175 et 195 g Na$_2$O/litre et le taux de silice soluble rapportée à Na$_2$O est compris entre 0,80 et 0,90%.

Le mélange et la dilution des suspensions 4'a et 4b est réalisée à l'étape suivante D. Plus précisément, la suspension 4'a issue de l'attaque atmosphérique, déjà légèrement refroidie entre 95 et 100°C, est intimement mélangée avec la suspension 4b, issue de l'attaque en autoclave, dont la température après détentes successives est encore d'environ 120°C, ce qui permet de réchauffer à la fois la suspension trop froide 4'a de l'attaque atmosphérique et une partie 20b de la liqueur de dilution 20 provenant du lavage à contre-courant F des boues rouges. Cette liqueur de dilution 20b contenant moins de 100 g de Na$_2$O/litre est destinée à abaisser la concentration en soude caustique du mélange de suspensions 4'a et 4b dans une plage de concentrations légèrement inférieure à 175 g Na$_2$O/litre plus adaptée à la bonne réalisation des opérations ultérieures de décantation.

Ainsi, la suspension 5 résultant de l'étape mélange et dilution D, dont la température se situe entre 100 et 105°C avec un rapport Rp compris entre 1,135 et 1,25, une concentration en soude caustique comprise entre 160 et 175 g Na$_2$O/litre et un taux SiO$_2$/Na$_2$O $\leq$ 0,70% est mise en décantation E pour séparer de façon connue les boues rouges 19 mises en décharge 21 après lavage à contre-courant successivement par de l'eau de lavage 17 du trihydrate d'alumine de production 16, puis de l'eau pure 18.

La liqueur 6 issue de décantation, dont le Rp doit rester compris entre 1,13 et 1,23, est à nouveau diluée par une 3ème partie 20c de la liqueur de dilution 20 provenant du lavage à contre-courant des boues rouges puis subit une filtration de sécurité G en vue d'éliminer les fines particules de boue encore en suspension. Le filtrat clarifié 7 de liqueur sursaturée d'aluminate de sodium dont la concentration ne doit pas excéder 160 g Na$_2$O/litre est décomposé H en présence d'amorce de trihydrate 10 recyclé selon l'art antérieur. La fin du cycle opératoire est réalisée de façon strictement identique à celle précédemment décrite à partir de la figure 1.

On notera que le taux de silice contrôlé entre 0,60 et 0,65% dans la liqueur 5 après dilution D permet de garantir dans le trihydrate d'alumine précipité à l'étape de décomposition moins de 100 ppm de silice rapportée à Al$_2$O$_3$ et cela sans modifier sensiblement les capacités nécessaires à la dessilicatation prévue pour mettre en oeuvre haabituellement le procédé d'attaque mixte de bauxite à trihydrate qui conserve donc tous ses avantages, comme il ressort des exemples d'application suivants à savoir :

- une productivité élevée supérieure à 80 kg Al$_2$O$_3$/m$_3$
- un rendement d'extraction de la bauxite supérieur à 95%
- des coûts d'exploitation et surtout d'investissement réduits.

## EXEMPLES D'APPLICATION

Les 3 premiers exemples d'application ont été réalisés à partir de 3 lots identiques de 100 tonnes de bauxite à trihydrate d'origine indienne de composition (sur sec) suivante :

| Al$_2$O3 % : 44,7 | SiO$_2$ % : 2,7 | dont SiO$_2$ réactif % : 2,3 |
| Fe$_2$O$_3$ % : 26,6 | TiO$_2$ % : 2,4 | perte au feu % : 23,4 |

Exemple 1 :

La totalité du 1er lot de 100 tonnes a été traitée par attaque atmosphérique selon l'art antérieur.

- Broyage humide et dessilicatation en présence d'une aliquote 14 de liqueur décomposée à raison de 1660 kg de bauxite par m3 de liqueur pendant 10 heures à 100°C.

- Liqueur d'attaque 13 après évaporation :
  Rp = 0,61          Na$_2$O g/l = 200,3

- Attaque à 106/107°C pendant 2 heures en réacteur atmosphérique de la totalité du lot après broyage et dessilicatation.

- Suspension 4a après attaque :
  Rp = 1,10          Na$_2$O g/l = 180,2
  Température 105°C

- Suspension 5 après dilution de la suspension 4a
  Rp : 1,08          Na$_2$O g/l = 150,4
  Température 89°C

- Liqueur 7 avant décomposition
  Rp = 1,03          Na$_2$O g/l = 150,4

- Décomposition en présence d'amorce de trihydrate d'alumine entre 62°C et 55°C.

- Liqueur décomposée 11 avant recyclage comme liqueur d'attaque
  Rp = 0,61    Na$_2$O g/l = 156,8

Soit une productivité de

(1,03 - 0,61) 150,4 = 63,2 g/l (63,2 kg/m3)

Exemple 2

Attaque mixte selon l'invention du 2ème lot de 100 tonnes de trihydrate d'alumine :
La moitié du lot soit 50 tonnes a été traitée par attaque atmosphérique L'autre moitié du lot soit 50 tonnes a été traitée par attaque en autoclave à 155°C.

- Broyage humide et dessilicatation dans les conditions de l'exemple 1.

- Liqueur d'attaque 13 après évaporation
  Rp = 0,59    Na$_2$O g/l = 210

- Attaque à 105/106°C pendant 2 heures en réacteur atmosphérique des 50 tonnes de bauxite broyée et dessilicatée.

- Suspension 4a après attaque atmosphérique
  Rp = 1,11    Na$_2$O g/l = 184,8
  Température 105°C

- Attaque à 155°C pendant 10 minutes en autoclave des autres 50 tonnes de bauxite broyée dessilicatée. - Suspension 4b après attaque en autoclave et détente partielle
  Rp = 1,46    Na$_2$O g/l = 203,2
  Température = 120°C

- Suspension 5 après mélange et dilution des suspensions 4a et 4b
  Rp = 1,23    Na$_2$O g/l = 148,4
  Température 104°C

- Liqueur 8 avant décomposition
  Rp = 1,22    Na$_2$O g/l = 148,4

- Décomposition en présence d'amorce de trihydrate d'alumine entre 62°C et 55°C.

- Liqueur décomposée 11 avant recyclage comme liqueur d'attaque
  Rp = 0,59    Na$_2$O g/l = 157

Soit une productivité de

(1,22 - 0,59) 148,4 = 93,5 g/l (93,5 kg/m3).

Exemple 3

Attaque mixte selon l'invention du 3ème lot de 100 tonnes de trihydrate d'alumine.
65% du lot soit 65 tonnes a été traitée par attaque atmosphérique 35% du lot soit 35 tonnes a été traitée par attaque en autoclave à 145°C.

- Broyage humide et dessilicatation dans les conditions de l'exemple 1

- Liqueur d'attaque 13 après évaporation
  Rp = 0,57    Na$_2$O g/l = 196,1

- attaque à 104/105°C pendant 4 heures en réacteur atmosphérique des 65 tonnes de bauxite broyée dessilicatée. - Suspension 4a après attaque atmosphérique
  Rp = 1,10    Na$_2$O g/l = 175,8
  Température 106°C

- attaque à 145°C pendant 15 minutes en autoclave des 35 tonnes de bauxite broyée dessilicatée

- Suspension 4b après attaque en autoclave
  Rp = 1,40    Na$_2$O g/l = 192,1
  Température de sortie d'attaque après détente partielle : 120°C

- Suspension 5 après mélange et dilution des suspensions 4a et 4b
  Rp = 1,175    Na$_2$O g/l = 145,8
  Température 101°C

- Liqueur 8 avant décomposition
  Rp = 1,17    Na$_2$O g/l = 145,7

- Décomposition en présence d'amorce de trihydrate d'alumine entre 62°C et 55°C.

- Liqueur décomposée 11 avant recyclage comme liqueur d'attaque
  Rp = 0,57    Na$_2$O g/l = 153,2

Soit une productivité de

(1,17 - 0,57) 145,7 = 87,5 g/l (87,5 kg/m3)

Exemple 4

Ce 4ème exemple d'application associant la double dessilicatation à l'attaque mixte, a été réalisé à partir d'un lot de 100 tonnes de bauxite à trihydrate d'alumine d'origine Indienne à faible teneur en silice réactive ayant la composition (sur sec) suivante :

$Al_2O_3$%: 45,45     $SiO_2$%: 2,57     dont $SiO_2$ réactif : % 1,30

$Fe_2O_3$%: 25,13     $TiO_2$%: 2,58.

Les conditions de broyage, de prédessilicatation, puis d'attaques à pression atmosphérique et à moyenne pression sont rigoureusement les mêmes que celles de l'exemple 2, on obtient d'une part une suspension 4a issue de l'attaque atmosphérique et titrant :

$Na_2O$ = 193 g/l     Rp = 1,09     $SiO_2/Na_2O$ = 0,66% d'autre part une suspension 4b issue de l'attaque à moyenne pression et titrant :

$Na_2O$ = 178,6 g/l     Rp = 1,35     $SiO_2/Na_2O$ = 0,87%.

La suspension 4a subit alors une post-dessilicatation dans les conditions suivantes : après une légère dilution avec une eau de lavage 20a des boues au trihydrate d'alumine précipité pour la production, ajuster la concentration à 170 g $Na_2O$/litre, la suspension 4a est maintenue sous agitation à 100°C pendant 4 heures. La suspension résultante 4'a titre alors :

$Na_2O$ = 171 g/l     Rp = 1,09     $SiO_2/Na_2O$ = 0,50%.

Grâce à l'excellent taux d'épuration en silice, la suspension résultant du mélange des suspensions 4'a (environ 60% du volume total) et 4b (environ 40% du volume total) titre avant dilution D et décantation E :

$Na_2O$ = 187,2 g/l     Rp = 1,19     $SiO_2/Na_2O$ = 0,64%.

A noter qu'en ne procédant qu'à une prédessilicatation d'une durée de 10 heures à 100°C le taux $SiO_2/Na_2O$ est de 0,76% et qu'une durée de 39 heures dans ces conditions est nécessaire pour abaisser le taux $SiO_2/Na_2O$ à 0,65%.

Ainsi, on constate que la double dessilicatation est le seul moyen industriel qui permette, à forte concentration en $Na_2O$ d'abaisser rapidement la teneur en silice dans la liqueur issue de l'attaque atmosphérique à un taux $SiO_2/NaO_2 \leq 0,5$% suffisamment bas pour compenser le taux de silice systématiquement élevé ($SiO_2/Na_2O$ compris entre 0,8 et 0,9%) de la liqueur issue de l'attaque moyenne pression et maintenir ainsi le taux $SiO_2/Na_2O \leq 0,65$% requis pour le mélange de ces 2 liqueurs destiné à être décomposé.

Après dilution D par une aliquote 20b d'eau de lavage 20, la suspension 5 qui titre $Na_2O$ = 169,5 g/l ; Rp = 1,18 et $SiO_2/Na_2O$ = 0,63%, est décantée. La liqueur 6 issue de décantation E est rediluée par une autre aliquote 20c d'eau de lavage pour abaisser la concentration en soude caustique à moins de 160 g $Na_2O$/litre. Après filtration G et avant décomposition H la liqueur 7 titre alors :

$Na_2O$ = 149 g/l     Rp = 1,16     $SiO_2/Na_2O$ = 0,59

Par décomposition en présence d'amorce de trihydrate d'alumine entre 62 et 65°C on obtient une liqueur décomposée 11 titrant :

$Na_2O$ = 157 g/l     Rp = 0,58 et $SiO_2/Na_2O$ = 0,58 qui est recyclée comme liqueur d'attaque.

La productivité de liqueur est donc de :

(1,16 - 0,58)149 = 86,4 g/l (86,4 kg/m3) donc supérieure à 80 g/l et cela en conservant un rendement global d'extraction d'alumine solubilisable supérieur à 96% ainsi qu'une teneur pondérale en silice dans le trihydrate d'alumine précipité inférieure à 50 ppm.

## AVANTAGE DU PROCEDE

Outre le fait que des productivités de l'ordre de 90 kg/m3 équivalentes à celles des procédés d'attaque à haute température et bien supérieures à celles des procédés atmosphériques soient obtenues avec le procédé mixte selon l'invention, ce dernier présente l'avantage de pouvoir s'intégrer très facilement à un procédé atmosphérique. Ainsi dans le cadre, par exemple, d'une augmentation de capacité d'une chaîne de traitement utilisant le procédé atmosphérique, le surplus de capacité peut être aisément obtenue par la mise en oeuvre d'une petite chaîne auxiliaire d'autoclaves qui, fonctionnant dans les conditions du procédé mixte de l'invention, optimisera la productivité de l'ensemble de la chaîne existante mais conduira aussi à réduire le montant global de l'investissement, compte tenu de la réduction des volumes spécifiques de matières traitées qu'autorise le procédé mixte. En effet le coût d'acquisition de moyens complémentaires d'attaque sous pression, notamment d'autoclaves de préférence à des réacteurs tubulaires en raison de l'abrasivité des suspensions très concentrées en matière sèche et en soude, est largement compensé par l'économie réalisée sur le nombre d'appareils supplémentaires (décanteur, décomposeur, réacteurs atmosphériques, évaporateurs...) qu'il conviendrait de mettre en oeuvre dans le cadre d'un procédé d'attaque atmosphérique selon l'art antérieur.

## Revendications

1. Procédé de traitement de bauxite à trihydrate d'alumine par attaque sodique, selon le procédé Bayer, comportant les étapes de broyage en présence d'une aliquote de liqueur d'aluminate de sodium, puis de mise en contact de ladite bauxite broyée avec le reste de la liqueur décomposée, éventuellement concentrée, pour former une suspension qui, après dilution, est décantée et filtrée pour séparer la fraction solide des boues rouges de la liqueur d'aluminate de sodium sursaturée, ladite liqueur étant alors décomposée en présence d'amorce puis recyclée comme liqueur d'attaque après séparation du trihydrate d'alumine caractérisé en ce que :

- Une 1ère fraction d'au moins 40% en poids de bauxite à trihydrate broyée est mise en contact à la pression atmosphérique à une température comprise entre 100°C et 107°C et pendant au moins 1 heure avec une aliquote de liqueur décomposée et éventuellement concentrée par évaporation ou liqueur d'attaque, dont le rapport pondéral Rp est compris entre 0,5 et 0,7 et la concentration en soude caustique est comprise entre 180 et 220 g Na2O/litre, pour former une 1ère suspension dont le rapport pondéral Rp est compris entre 1 et 1,20 et la concentration en soude caustique est comprise entre 160 et 200 g $Na_2O$/litre,

- la fraction restante de bauxite à trihydrate broyée, n'excédant pas 60% en poids, est mise en contact pendant au moins 5 minutes entre 130°C et 180°C avec le reste de la liqueur décomposée et éventuellement concentrée par évaporation ou liqueur d'attaque, pour former une 2ème suspension dont le rapport pondéral Rp est compris entre 1,30 et 1,55 et la concentration en soude caustique est comprise entre 160 et 220 g $Na_2O$/litre,

- les 2 suspensions ainsi obtenues, dont les températures après attaque sont respectivement comprises entre 90°C et 100°C pour la 1ère suspension et 110°C et 130°C pour la 2ème suspension après détente, sont intensément mélangées et diluées avec l'eau pour former une 3ème suspension dont le rapport des concentrations Rp est compris entre 1,13 et 1,28 et la concentration en soude caustique est comprise entre 140 et 175 g $Na_2O$/litre, à une température comprise entre 100°C et 107°C,

- ladite 3ème suspension, dont le Rp après séparation des boues, doit rester compris entre 1,13 et 1,23 est éventuellement rediluée pour régler sa concentration en soude caustique avant filtration entre 140 et 160 g $Na_2O$/litre, puis décomposée en présence d'amorce pour précipiter du trihydrate d'alumine qui est séparé par filtration de la liqueur décomposée dont le rapport de concentration Rp est compris entre 0,5 et 0,7.

2. Procédé selon revendication 1 caractérisé en ce que de préférence 50 à 65% en poids de la bauxite est attaquée à la pression atmosphérique et la fraction restante de 35 à 50% est attaquée en autoclave sous pression.

3. Procédé selon la revendication 1 ou 2 caractérisé en ce que le rapport pondéral Rp de l'aliquote de liqueur décomposée et concentrée par évaporation, ou liqueur d'attaque est compris entre 0,57 et 0,65 et sa concentration en soude caustique est comprise entre 195 et 215 g $Na_2O$/litre.

4. Procédé selon l'une quelconque des revendications 1 à 3 caractérisé en ce que le temps de mise en contact à la pression atmosphérique entre 103°C et 107°C de la 1ère fraction de bauxite à trihydrate broyée est compris entre 2 et 5 heures.

5. Procédé selon l'une quelconque des revendications 1 à 4 caractérisé en ce que le rapport pondéral Rp de la 1ère suspension issue de l'attaque atmosphérique de la 1ère fraction de bauxite est compris entre 1,05 et 1,15 et sa concentration en soude caustique est de préférence comprise entre 175 et 185 g $Na_2O$/litre.

6. Procédé selon l'une quelconque des revendications 1 à 5 caractérisé en ce que le temps de mise en contact en autoclave entre 140°C et 155°C de la fraction restante de bauxite à trihydrate broyée est compris entre 10 et 30 minutes.

7. Procédé selon l'une quelconque des revendications 1 à 6 caractérisé en ce que le rapport pondéral Rp de la 2ème suspension issue de l'attaque en autoclave de la fraction restante de bauxite est compris entre 1,30 et 1,50 et sa concentration en soude caustique est comprise entre 175 et 195 g $Na_2O$/litre.

8. Procédé selon l'une quelconque des revendications 1 à 7 caractérisé en ce que le rapport pondéral Rp de la 3ème suspension issue du mélange des 2 suspensions précédentes après dilution avec de l'eau est compris entre 1,135 et 1,25 et sa concentration en soude caustique est comprise entre 160 et 175 g $Na_2O$/litre.

9. Procédé selon la revendication 8 caractérisé en ce que la température de la 3ème suspension est comprise entre 100°C et 105°C.

10. Procédé selon l'une quelconque des revendications 1 à 9 caractérisé en ce qu'après séparation du trihydrate d'alumine le rapport pondéral Rp de la liqueur décomposée est compris entre 0,57 et 0,65 et sa concentration en soude caustique est comprise entre 150 et 160 g $Na_2O$/litre.

11. Procédé selon la revendication 1 caractérisé en ce qu'il comporte une étape de dessilicatation après le broyage humide de la bauxite à trihydrate en présence d'une aliquote de la liqueur d'attaque et avant séparation de la suspension en deux fractions en vue de leurs attaques séparées, une fraction de liqueur décomposée étant recyclée directement à l'étape de broyage humide de la bauxite en tête du procédé à raison d'environ 0,6 m3 par tonne de bauxite à broyer.

12. Procédé selon la revendication 11 caractérisé en ce que la fraction de liqueur décomposée de Rp compris entre 0,57 et 0,65 et de concentration en soude caustique comprise entre 150 et 160 g Na2O/litre est recyclée à l'étape de broyage humide en tête de procédé pour former une suspension épaisse à raison de 1600 à 1800 kg de minerai sec par m$^3$ de liqueur décomposée.

13. Procédé selon l'une quelconque des revendications 11 ou 12 caractérisé en ce que la dessilicatation de la suspension épaisse issue du broyage humide est effectuée entre 90 et 105°C pendant 5 à 10 heures.

14. Procédé selon l'une quelconque des revendications 11 à 13 caractérisé en ce qu'après légère dilution la suspension issue de l'attaque atmosphérique est soumise à une nouvelle dessilicatation ou post-dessilicatation par maintien en température à environ 100°C pendant au moins 2 heures.

15. Procédé selon la revendication 14 caractérisé en ce que la durée de la post-dessilicatation est comprise entre 2 et 8 heures et de préférence entre 3 et 5 heures.

16. Procédé selon la revendication 14 caractérisé en ce que la concentration en soude caustique de la suspension issue de l'attaque atmosphérique est ajustée par dilution entre 160 et 180 g Na$_2$O/litre et de préférence entre 165 et 175 g Na$_2$O/litre.

17. Procédé selon la revendication 16 caractérisé en ce que la dilution de ladite suspension est effectuée par une partie des eaux de dilution provenant du lavage à contre-courant des boues insolubles ou du lavage du trihydrate d'alumine de production.

18. Procédé selon l'une quelconque des revendications 11 à 17 caractérisé en ce que la teneur pondérale en SiO$_2$ solubilisée rapportée à la soude caustique Na$_2$O dans la suspension issue de l'attaque à pression atmosphérique est comprise entre 0,40 et 0,50%.

19. Procédé selon l'une quelconque des revendications 1 à 18 caractérisé en ce que la teneur pondérale en SiO$_2$ solubilisée rapportée à la soude caustique Na$_2$O dans le mélange des 2 suspensions issues respectivement des attaques à pression atmosphérique et à moyenne pression est inférieure ou égale à 0,70%.

**Claims**

1. Process for the treatment of alumina trihydrate bauxite by caustic digestion using the Bayer process, comprising a first step consisting of grinding in the presence of a sodium aluminate liquor aliquot, and then a step in which the said ground bauxite is put into contact with the rest of the spent liquor (possibly concentrated) to form a slurry which is diluted and then settled and filtered to separate the solid fraction from the red mud of the supersaturated sodium aluminate liquor, the said liquor then being spent in the presence of seed and then recycled as a digestion liquor after separation of the alumina trihydrate, characterized in that:

- a first fraction consisting of at least 40% by weight of the ground trihydrate bauxite is put into contact at atmospheric pressure for at least one hour and at a temperature of between 100°C and 107°C, with a spent liquor aliquot possibly concentrated by evaporation (also called the digestion liquor), which has a ratio by weight Rp of between 0.5 and 0.7 and the caustic concentration is between 180 and 220 g of Na$_2$O/liter, to form a first slurry in which the ratio by weight Rp is between 1 and 1.20 and the caustic concentration is between 160 and 200 g of Na$_2$O/liter,

- the remaining fraction of ground trihydrate bauxite, not exceeding 60% by weight, is put into contact with the rest of the spent liquor (possibly concentrated by evaporation) or the digestion liquor for at least 5 minutes between 130°C and 180°C to form a second slurry, in which the ratio by weight Rp is between 1.30 and 1.55 and the caustic concentration is between 160 to 220 g Na$_2$O/liter,

- both resulting slurries, for which the temperatures after digestion are between 90°C and 100°C for the first slurry, and between 110°C and 130°C for the second slurry after the flash step, are thoroughly mixed and diluted with water to form a third slurry in which the ratio of the concentrations Rp is between 1.13 and 1.28 and the caustic concentration is between 140 and 175 g of Na$_2$O/liter, at a temperature of between 100°C and 107°C,

- the said 3rd slurry, for which the Rp after separation of the mud must remain between 1.13 and 1.23, may be rediluted to adjust its caustic concentration before filtration to between 140 and 160 g of Na$_2$O/liter, then spent in the presence of seed to precipitate alumina trihydrate which is separated by filtration of the spent liquor that has a concentration ratio Rp of between 0.5 and 0.7.

2. Process according to claim 1, characterized in that preferably 50 to 65% by weight of the bauxite is digested at atmospheric pressure and the remaining fraction of 35 to 50% is digested in a pressurized digester.

3. Process according to claim 1 or 2, characterized in that the ratio by weight Rp of the spent liquor aliquot concentrated by evaporation (also called the digestion liquor), is between 0.57 and 0.65 and its caustic concentration is between 195 and 215 g $Na_2O$/liter.

4. Process according to any one of claims 1 to 3, characterized in that the time during which the first fraction of ground trihydrate bauxite is put into contact at atmospheric pressure between 103 and 107°C, is between 2 and 5 hours.

5. Process according to any one of claims 1 to 4, characterized in that the ratio by weight Rp of the first slurry derived from atmospheric digestion of the first bauxite fraction is between 1.05 and 1.15 and its caustic concentration is preferably between 175 and 185 g of $Na_2O$/liter.

6. Process according to any one of claims 1 to 5, characterized in that the contact time of the remaining fraction of ground trihydrate bauxite at between 140°C and 155°C in a digester is between 10 and 30 minutes.

7. Process according to any one of claims 1 to 6, characterized in that the ratio by weight Rp of the second slurry derived from digestion in a digester of the remaining bauxite fraction is between 1.30 and 1.50 and its caustic concentration is between 175 and 195 g of $Na_2O$/liter.

8. Process according to any one of claims 1 to 7, characterized in that the ratio by weight Rp of the third slurry derived from mixing the two previous slurries after diluting with water is between 1.135 and 1.25 and its caustic concentration is between 160 and 175 g of $Na_2O$/liter.

9. Process according to claim 8, characterized in that the temperature of the third slurry is between 100°C and 105°C.

10. Process according to any one of claims 1 to 9, characterized in that after separation of alumina trihydrate, the ratio by weight Rp of the spent liquor is between 0.57 and 0.65 and its caustic concentration is between 150 and 160 g of $Na_2O$/liter.

11. Process according to claim 1, characterized in that it comprises a desilication step after wet grinding of trihydrate bauxite in the presence of a digestion liquor aliquot and before separation of the slurry into two fractions for separate digestions, a fraction of the spent liquor being recycled directly in the bauxite wet grinding step at the beginning of the process at a rate of 0.6 m3 per tonne of bauxite to be ground.

12. Process according to claim 11, characterized in that the fraction of spent liquor has an Rp of between 0.57 and 0.65 and a caustic concentration of between 150 and 160 g of $Na_2O$/liter and is recycled in the wet grinding step at the beginning of the process to form a thick slurry with a content of 1600 to 1800 kg of dry ore per $m^3$ of spent liquor.

13. Process according to any one of claims 11 or 12, characterized in that desilication of the thick slurry output from wet grounding takes place at between 90 and 105°C for 5 to 10 hours.

14. Process according to any one of claims 11 to 13, characterized in that after slight dilution, the slurry derived from atmospheric digestion is subject to a new desilication or post-desilication by holding the temperature at about 100°C for at least 2 hours.

15. Process according to claim 14, characterized in that the duration of post-desilication is between 2 and 8 hours and is preferably between 3 and 5 hours.

16. Process according to claim 14, characterized in that the caustic concentration of the slurry output from the atmospheric digestion is adjusted by dilution to between 160 and 180 g $Na_2O$/liter, and preferably between 165 and 175 g $Na_2O$/liter.

17. Process according to claim 16, characterized in that the said slurry is diluted by part of the dilution water derived from backwashing insoluble mud or washing production alumina trihydrate.

18. Process according to any one of claims 11 to 17, characterized in that the content by weight of solubilized $SiO_2$ compared with the caustic soda $Na_2O$ in the slurry derived from digestion at atmospheric pressure is between 0.40 and 0.50%.

19. Process according to any one of claims 1 to 18, characterized in that the content by weight of solubilized $SiO_2$ compared with the caustic soda $Na_2O$ in the mix of the two slurries derived from digestion at atmospheric pressure and at medium pressure respectively, is less than or equal to 0.70%.

**Patentansprüche**

1. Verfahren zur Behandlung von Aluminiumtrihydrat enthaltendem Bauxit durch Natronätzen nach dem Bayer-Verfahren, mit folgenden Schritten : Mahlung in Anwesenheit einer aliquoten Natriumaluminatlösung und Kontakt des gemahlenen Bauxits mit dem Rest der zersetzten, eventuell konzentrierten Lösung zur Bildung einer Suspension, die nach Verdünnung geklärt und filtriert wird, um die feste Fraktion des Rotschlamms von der übersättigten Natriumaluminatlösung zu trennen, wobei die Lösung in Anwesenheit eines Initiators zersetzt und dann nach Trennung des Aluminiumtrihydrats als Atzlösung wiederverwendet wird, dadurch gekennzeichnet, daß

- eine 1. Fraktion von mindestens 40 Masse-% gemahlenem Trihydratbauxit unter Atmosphärendruck bei einer Temperatur von 100 bis 107°C und während einer Dauer von mindestens 1 Stunde mit einer zersetzten und eventuell durch Verdunstung konzentrierten aliquoten Lösung oder Ätzlösung in Kontakt gebracht wird, deren Massenverhältnis Rp im Bereich von 0,5 bis 0,7 und deren Ätznatronkonzentration im Bereich von 180 bis 220 g $Na_2O$/Liter liegt, um eine erste Suspension mit einem Massenverhältnis Rp von 1 bis 1,20 und einer Ätznatronkonzentration von 160 und 200 g $Na_2O$/Liter zu bilden,

- die 60 Masse-% nicht übersteigende restliche Fraktion von gemahlenem Trihydratbauxit während mindestens 5 Minuten bei einer Temperatur von 130 bis 180°C mit dem Rest der zersetzten und eventuell durch Verdunstung konzentrierten Lösung oder Ätzlösung in Kontakt gebracht wird, um eine zweite Suspension mit einem Massenverhältnis Rp von 1,30 bis 1,55 und einer Ätznatronkonzentration von 160 bis 220 g $Na_2O$/Liter zu bilden,

- die auf diese Weise erhaltenen zwei Suspensionen, deren Temperaturen im Bereich von 90 bis 100°C für die erste Suspension und 110 bis 130°C für die zweite Suspension liegen, nach Druckminderung kräftig miteinander vermischt und mit Wasser verdünnt werden, um bei einer Temperatur von 100 bis 107°C eine dritte Suspension mit einem Massenverhältnis Rp von 1,13 bis 1,28 und einer Ätznatronkonzentration von 140 und 175 g $Na_2O$/Liter zu bilden,

- die dritte Suspension, deren Rp nach Trennung des Schlamms im Bereich von 1,13 und 1,23 bleiben soll, eventuell verdünnt wird, um ihre Ätznatronkonzentration vor dem Filtrieren auf 140 bis 160 g $Na_2O$/Liter einzustellen, und dann in Anwesenheit eines Initiators zersetzt wird, um Aluminiumtrihydrat niederzuschlagen, das von der zersetzten Lösung, deren Konzentrationsverhältnis Rp zwischen 0,5 und 0,7 liegt, durch Filtrieren getrennt wird.

2. Verfahren nach Anspruch 1, dadurch gekennzeichnet, daß vorzugweise mindestens 50 bis 65 Masse-% des Bauxits bei Atmosphärendruck und die restliche Fraktion von 35 bis 50 % im druckbeaufschlagten Autoklav geätzt wird.

3. Verfahren nach Anspruch 1 oder 2, dadurch gekennzeichnet, daß das Massenverhältnis Rp der zersetzten und durch Verdunstung konzentrierten aliquoten Lösung oder Ätzlösung im Bereich von 0,57 bis 0,65 und ihre Ätznatronkonzentration im Bereich von 195 bis 215 g $Na_2O$/Liter liegt.

4. Verfahren nach einem der Ansprüche 1 bis 3, dadurch gekennzeichnet, daß die Kontaktzeit der ersten Fraktion von gemahlenem Trihydratbauxit unter Atmosphärendruck bei einer Temperatur von 103 bis 107°C 2 bis 5 Stunden beträgt.

5. Verfahren nach einem der Ansprüche 1 bis 4, dadurch gekennzeichnet, daß das Massenverhältnis Rp der aus der Ätzung unter Atmosphärendruck entstandenen ersten Fraktion von Bauxit im Bereich von 1,05 bis 1,15 und ihre Ätznatronkonzentration vorzugsweise im Bereich von 175 bis 185 g $Na_2O$/Liter liegt.

6. Verfahren nach einem der Ansprüche 1 bis 5, dadurch gekennzeichnet, daR die Kontaktzeit der restlichen Fraktion von gemahlenem Trihydratbauxit im Autoklav bei einer Temperatur von 140 bis 155°C 10 bis 30 Minuten beträgt.

7. Verfahren nach einem der Ansprüche 1 bis 6, dadurch gekennzeichnet, daß das Massenverhältnis Rp der aus der Ätzung im Autoklav entstandenen restlichen Fraktion von Bauxit im Bereich von 1,30 bis 1,50 und ihre Ätznatronkonzentration im Bereich von 175 bis 195 g $Na_2O$/Liter liegt.

8. Verfahren nach einem der Ansprüche 1 bis 7, dadurch gekennzeichnet, daR das Massenverhältnis Rp der aus der Mischung der zwei vorhergehenden Suspensionen entstandenen dritten Suspension nach Verdünnung mit Wasser im Bereich von 1,135 bis 1,25 und ihre Ätznatronkonzentration im Bereich von 160 bis 175 g $Na_2O$/Liter liegt.

9. Verfahren nach Anspruch 8, dadurch gekennzeichnet, daß die Temperatur der dritten Suspension im Bereich von 100 bis 105°C liegt.

10. Verfahren nach einem der Ansprüche 1 bis 9, dadurch gekennzeichnet, daß das Massenverhältnis Rp der zersetzten Lösung nach Trennung des Aluminiumtrihydrats im Bereich von 0,57 bis 0,65 und ihre Ätznatronkonzentration im Bereich von 150 bis 160 g $Na_2O$/Liter liegt.

11. Verfahren nach Anspruch 1, dadurch gekennzeichnet, daß es einen Desilikatisierungsschritt umfaßt, der nach der Naßmahlung des Trihydratbauxits in Anwesenheit der aliquoten Ätzlösung und vor der Trennung der Suspension in zwei Fraktionen zwecks getrennter Ätzungen erfolgt, wobei eine Fraktion der zersetzten Lösung beim Naßmahlungsschritt des Bauxits zu Beginn des Verfahrens in einem Verhältnis von etwa 0,6 m$^3$ pro Tonne zu mahlendem Bauxit direkt wiederverwendet wird.

12. Verfahren nach Anspruch 11, dadurch gekennzeichnet, daß die Fraktion der zersetzten Lösung, deren Rp im Bereich von 0,57 bis 0,65 und deren Ätznatronkonzentration im Bereich von 150 bis 160 g Na$_2$L/Liter liegt, beim Naßmahlungsschritt zu Beginn des Verfahrens wiederverwendet wird, um eine dickflüssige Suspension im Verhältnis von 1600 bis 1800 kg Trockenerz pro m$^3$ zersetzter Lösung zu bilden.

13. Verfahren nach einem der Ansprüche 11 oder 12, dadurch gekennzeichnet, daß die Desilikatisierung der aus der Naßmahlung entstandenen dickflüssigen Suspension bei einer Temperatur von 90 bis 105°C während 5 bis 10 Stunden durchgeführt wird.

14. Verfahren nach einem der Ansprüche 11 bis 13, dadurch gekennzeichnet, daß die durch Ätzen unter Atmosphärendruck entstandene Suspension nach leichter Verdünnung einer erneuten Desilikatisierung oder oder Nachdesilikatisierung ausgesetzt wird, indem die Temperatur während einer Dauer von mindestens 2 Stunden auf etwa 100°C gehalten wird.

15. Verfahren nach Anspruch 14, dadurch gekennzeichnet, daß die Dauer der Nachdesilikatisierung 2 bis 8 Stunden, und vorzugsweise 3 bis 5 Stunden beträgt.

16. Verfahren nach Anspruch 14, dadurch gekennzeichnet, daß die Ätznatronkonzentration der aus der Ätzung unter Atmosphärendruck entstandenen Suspension durch Verdünnung auf 160 bis 180 g Na$_2$O/Liter und vorzugsweise 165 bis 175 g Na$_2$O/Liter eingestellt wird.

17. Verfahren nach Anspruch 16, dadurch gekennzeichnet, daß die Verdünnung der Suspension mit einem Teil des Verdünnungswassers aus der Gegenstromreinigung des unlöslichen Schlamms oder der Reinigung des gewonnenen Aluminiumtrihydrats durchgeführt wird.

18. Verfahren nach einem der Ansprüche 11 bis 17, dadurch gekennzeichnet, daß der Massenanteil von gelöstem SiO$_2$ bezogen auf das Ätznatron Na$_2$O in der aus der Ätzung unter Atmosphärendruck entstandenen Suspension im Bereich von 0,40 bis 0,50 % liegt.

19. Verfahren nach einem der Ansprüche 11 bis 18, dadurch gekennzeichnet, daß der Massenanteil von gelöstem SiO$_2$ bezogen auf das Ätznatron Na$_2$O im Gemisch der beiden aus den Ätzungen unter Atmosphärendruck bzw. mittlerem Druck entstanden Suspensionen kleiner oder gleich 0,70 % ist.

FIG. 1

FIG. 2